# EUROPEAN PATENT APPLICATION

(11) **EP 2 647 932 A1**
(43) Date of publication of application: **09.10.2013**
(21) Application number: 12195185.9
(22) Date of filing: 30.11.2012
(51) Int. Cl.: F25D 3/11

(54) **Oscillating flow freezer**

(30) Priority: 05.04.2012 US 201213439891
(71) Applicant: Linde Aktiengesellschaft, 80331 München (DE)
(72) Inventor: Newman, Michael D., Hillsborough, NJ New Jersey 08844 (US); McCormick, Stephen A., Warrington, PA Pennsylvania 18976 (US)
(74) Representative: Hofmann, Andreas

(57) **Abstract**

In order to eliminate the need for a fan / for fans without reducing the effectiveness of the heat transfer effect upon a product (18), in particular upon a food product, a method for reducing a temperature of the product (18) as well as a corresponding freezer (10) are proposed, comprising:
- a housing (12) having a sidewall (40, 42) defining a chamber (15) in the housing (12), and an inlet (20) and an outlet (22) in communication with the chamber (15); and
- a pair of pistons (44, 52) operatively associated with the housing (12) and in communication with the chamber (15), the pair of pistons (44, 52) operable out of phase with each other for oscillating a gas flow (16) within the chamber (15) to contact the product (18).

## Description

### Technical field of the present invention

The present invention relates to an apparatus and to methods for providing and controlling air flow and heat transfer effect across products, in particular food products, in freezing systems.

### Background of the present invention; prior art

Known freezers have a fan or a plurality of fans used to provide a convective airflow environment to accelerate the freezing rate of products, such as food products, being processed in the freezer. Fans require electrical energy to operate and contribute the thermal loads to the freezing processes which reduces the overall efficiency of the freezer.

### Disclosure of the present invention: object, solution, advantages

Starting from the disadvantages and shortcomings as described above and taking the prior art as discussed into account, an object of the present invention is to eliminate the need for a fan / for fans without reducing the effectiveness of the heat transfer effect upon products, in particular upon food products.

This object is accomplished by an apparatus comprising the features of claim 1 as well as by a method comprising the features of claim 11. Advantageous embodiments and expedient improvements of the present invention are disclosed in the respective dependent claims.

In order to eliminate the need for a fan without reducing the effectiveness of the heat transfer effect upon a product, the present invention provides for a freezer for the product including
- a housing having a sidewall defining a chamber or space in the housing, and an inlet and an outlet in communication with the chamber or space; and
- a pair of pistons operatively associated with the housing and in communication with the chamber or space, the pair of pistons operable out of phase with each other, in particular at least approximately 180 degrees out of phase with each other, for oscillating a gas flow within the chamber or space to contact the product.

In this context, oscillating a gas flow refers to the flow of gas moving or travelling back and forth between two points regardless of the manner, number of repetitions or frequency of repetitions by which the oscillating flow is implemented.

In particular, the length of the housing may be for example three meters to twenty meters and/or constructed as at least one tunnel freezer.

According to a preferred embodiment of the present invention, the sidewalls may extend to connect to each other and form at least one upper baffle at an interior of the space.

The upper baffle may be of solid construction and/or may be provided with at least one hole or port extending therethrough such that at least one pipe or conduit can be inserted through the hole or port to introduce liquid cryogen into the freezer apparatus. The liquid cryogen provided will expediently change phase into a gaseous-solid phrase when injected into the chamber.

In a favoured embodiment of the present invention, the pipe or conduit may have a first end connected to at least one manifold from which at least one or a plurality of nozzles are in communication therewith. The manifold may be disposed in the chamber. An opposite end of the pipe or conduit may be connected to at least one source of liquid cryogen.

The pipe or conduit may include at least one control valve for controlling at least one amount of the liquid cryogen to be introduced into the pipe or conduit and through to the manifold.

Independently thereof or in connection therewith, the respective sidewall is constructed or formed to provide at least one cylinder for a respective piston assembly in which the piston is disposed for reciprocating movement.

The respective piston may be connected to at least one respective shaft which can be for example of the screw jack or of the hydraulic type. The respective shaft may be connected to at least one respective motor for operating the respective piston. At least one respective seal or gasket may be mounted to the respective piston in order to prevent a majority if not all of the gas from getting behind the respective piston into the respective cylinder.

The pair of piston assemblies may be disposed at different, in particular opposed, sides of the housing. Each of the piston assemblies may include its respective piston, with the pistons
- optionally being electronically controlled and/or
- optionally being operatively associated with the housing.

According to an advantageous embodiment of the present invention, at least one transport apparatus, in particular at least one conveyor or conveyor belt, is disposed for operation from the inlet through the chamber or space to the outlet to transport the product through the freezer.

Preferably, the product being transported is exposed to a cryogenic substance provided by at least one cryogen injection apparatus or cryogenic injection assembly. The cryogen injection apparatus or cryogenic injection assembly may have
- a first end in communication with the chamber or space, and
- a second end in communication with a source of liquid cryogen.

In order to expediently provide the cryogenic substance to the chamber or space, the cryogen injection apparatus or cryogenic injection assembly may comprise
- at least one nozzle connected to the first end of the cryogen injection apparatus or cryogenic injection assembly, or
- at least one manifold connected to the first end of the cryogen injection apparatus or cryogenic injection assembly, the manifold having at least one nozzle.

So as to control an amount of the cryogenic substance to be introduced into the cryogen injection apparatus or cryogenic injection assembly and through to the nozzle(s) or to the manifold, at least one control valve may be provided in the cryogen injection apparatus or cryogenic injection assembly.

According to an expedient embodiment of the present invention, the cryogen injection apparatus or cryogenic injection assembly may be arranged such that the nozzle or a plurality of the nozzles is disposed more closely to the inlet than to the outlet. As it passes in proximity to the nozzle(s), the product being transported by the transport apparatus is exposed to a cryogenic spray.

In an advantageous embodiment of the present invention, at least one control apparatus may be provided in communication with the pair of pistons and the cryogen injection apparatus or cryogenic injection assembly, with said control apparatus controlling upstrokes and downstrokes of the pair of pistons and injection of the cryogenic substance into the chamber or space.

In an expedient way, a temperature gradient can be entered as an input to the control apparatus connected to the pistons for operating the apparatus at its most efficient setting. A desired temperature can be entered into the control apparatus by an operator.

The cryogenic substance may be selected from the group consisting of carbon dioxide (CO₂) and nitrogen (N₂), thereby permitting the apparatus to be used with food products for example.

According to a preferred embodiment of the present invention, at least one bleed gas exhaust pipe or bleed gas exhaust conduit in communication with the chamber proximate or space proximate one of the pair of pistons, in particular in communication with an interior of the cylinder for the piston, controls removal of a portion of the oscillating gas flow from the chamber or space and prevents atmosphere external to the freezer from entering the chamber or space.

Favourably, the freezer may comprise
- at least one inlet exhaust funnel, in particular at least one inlet exhaust flue, disposed proximate the inlet, and
- at least one outlet exhaust funnel, in particular at least one outlet exhaust flue, disposed proximate the outlet.

In order to restrict atmosphere external to the housing from entering the chamber or space, the freezer may advantageously comprise
- at least one inlet door, in particular at least one inlet skirt or inlet flap, is provided at the inlet, and
- at least one outlet door, in particular at least one outlet skirt or outlet flap, is provided at the outlet.
to retain the gas flow within the chamber or space.

The inlet door and/or the outlet door can be constructed of rubber, of plastic or of stainless steel and may be adjustable depending upon the dimensions of the product entering and being discharged from the freezing chamber.

In order to eliminate the need for a fan without reducing the effectiveness of the heat transfer effect upon a product, the present invention further provides for a method for reducing a temperature of a product in a freezer, comprising the steps of:
- providing the product to a chamber or space of the freezer for reducing the temperature of the product;
- injecting a cryogen substance into the chamber or space;
- oscillating an air flow within the chamber or space to charge the air flow with the cryogen substance; and
- contacting the product with the oscillating air flow.

Expediently, the step of oscillating an air flow comprises operating a pair of pistons out of phase, in particular at least approximately 180 degrees out of phase, and in communication with the chamber or space for providing the oscillating air flow. The operating may comprise operating strokes of each one of the pair of pistons out of phase with other strokes of the other one of said pair.

In a preferred manner, each of said strokes may extend along a distance of from two millimetres to six millimetres. Thereby, the frequency of reversing the airflow more quickly creates a vibratory action of the airflow to increase heat transfer to the product without expending as much energy as moving the pistons through their full strokes.

According to an advantageous embodiment of the present invention, the method may comprise the further steps of
- removing a portion of the oscillating air flow from the chamber or space; and
- establishing a temperature gradient across the chamber or space during the removing.

In this context, in order to provide the temperature gradient across the chamber or space,
- the injecting a cryogen substance,
- the oscillating an air flow and
- the removing a portion of the oscillating air flow
may be controlled.

The temperature gradient may be provided by the apparatus and the method employed by the apparatus. For example, from the inlet to discharge at the outlet, a stroke length of the discharge piston may be increased thereby pulling more of the gas in the direction of the outlet. The gas can then be bled from the piston cylinder at the bleed gas exhaust pipe or bleed gas exhaust conduit.

A larger portion of the overall gas mass may therefore be directed to the outlet and therefore, the gas warms during the freezing process and the temperature gradient is established. The pistons may be electronically controlled, and therefore the temperature gradient can be entered as an input. A desired temperature can be entered into the control apparatus by an operator.

The apparatus according to the present invention and the method according to the present invention provide for increased efficiency for using cryogen to chill or freeze products, in particular food products, because no energy from fans is necessary in the apparatus. The apparatus being able to operate its specific temperature gradients also contributes toward higher efficiencies. There are fewer moving parts and therefore less maintenance for the apparatus.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1 and/or on claim 11; further improvements, features and advantages of the present invention are explained below in more detail with reference to preferred embodiments by way of non-limiting example and to the appended drawing figures taken in conjunction with the description of the embodiments, of which:
FIG. 1 shows a freezer according to the present invention in a first position constructed to provide an oscillating airflow, with the freezer being operable according to a method of the present invention; and
FIG. 2 shows the freezer of FIG. 1 in a second position.

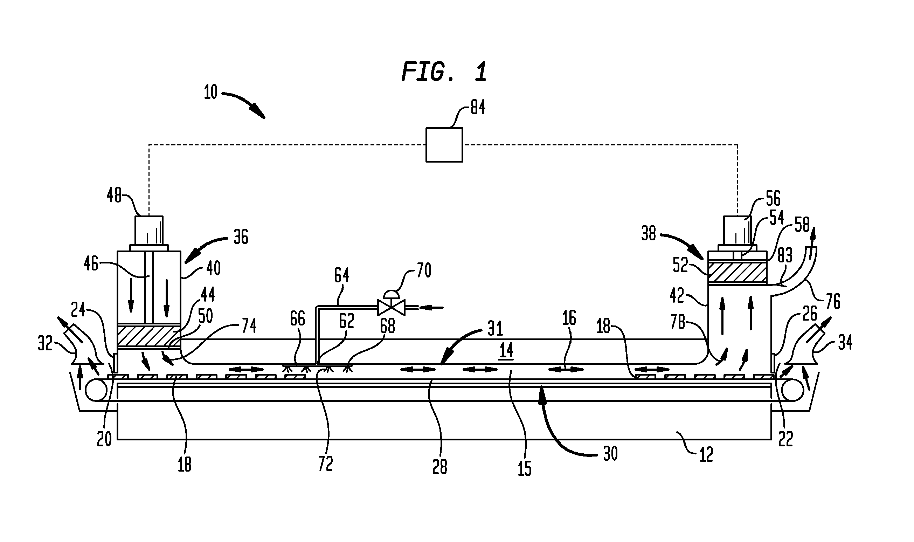

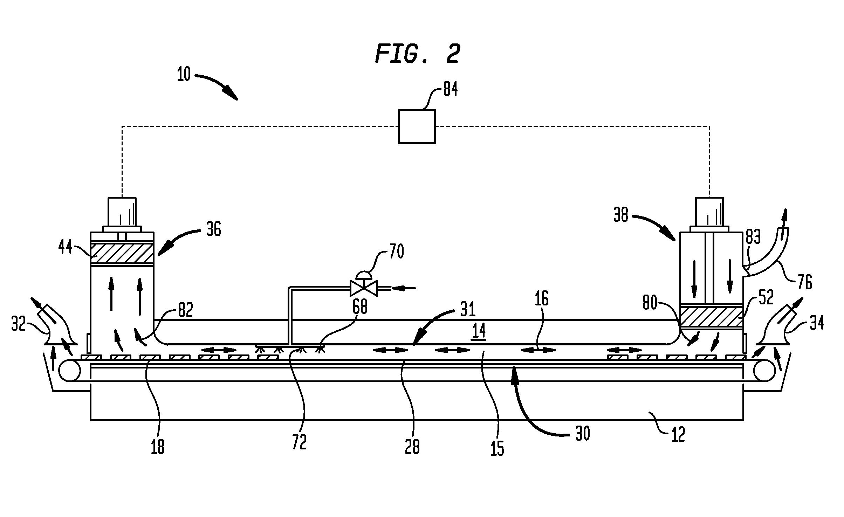

In the appended drawing figures, like equipment is labelled with the same reference numerals throughout the description of FIG. 1 and FIG. 2.

### Detailed description of the drawings; best way of embodying the present invention

Referring to FIG. 1, a freezer apparatus is shown generally at 10 which is constructed to provide an oscillating flow of cryogenic gas to products to be chilled or frozen. The oscillating flow may in one embodiment operate repetitiously at high frequency. The cryogenic gas may be carbon dioxide (CO₂) or nitrogen (N₂), thereby permitting the apparatus 10 to be used with food products for example, as discussed below.

As used herein, "oscillating flow" refers to the flow of gas moving or travelling back and forth between two points regardless of the manner, number of repetitions or frequency of repetitions by which the oscillating flow is implemented.

The apparatus 10 includes a housing 12 in which a space 14 is provided for providing a chilling or freezing convective gas flow 16 to correspondingly chill or freeze products 18, such as food products, transported through the space 14 in the housing 12. The housing 12 also includes and inlet 20 and an outlet 22. An inlet skirt 24 or flap is provided at the inlet 20, while an outlet skirt 26 or flap is provided at the outlet 22 to retain the gas flow 16 within the space 14.

A transport apparatus 28, such as a conveyor belt for example, is disposed for operation to transport the products 18 from the inlet 20 through the space 14 to the outlet 22.

The space 14 is provided with a baffle 30 disposed beneath the conveyor belt 28. The baffle 30 may be of solid construction. An inlet exhaust flue 32 is disposed proximate the inlet 20 of the housing 12. An outlet exhaust flue 34 is disposed proximate the outlet 22 of the housing 12.

A pair of piston assemblies 36, 38 are disposed at different sides of the housing 12. As shown in FIG. 1 and in FIG. 2, the assemblies 36, 38 may be disposed at opposed sides of the housing 12. Each of the piston assemblies includes its respective piston 44, 52. In one embodiment, the pistons 44, 52 are operatively associated with the housing 12, as shown for example in FIG. 1 and in FIG. 2.

A sidewall 40 and a sidewall 42 extend to form part of the housing 12. The sidewall 40 is formed to provide a cylinder for the piston 44, while the sidewall 42 is formed to provide a cylinder for the piston 52. The sidewalls 40, 42 extend as shown in FIG. 1 and in FIG. 2 to connect to each other and form an upper baffle 31 at an interior of the space 14.

The baffles 30, 31 therefore coact to minimize a portion of the space 14 to provide a freezing chamber 15 for chilling or freezing within the space for the oscillating gas flow 16. This construction and arrangement provides for a more intense and effective gas flow across the product 18. The baffles 30, 31 also prevent "dead space" above and below the baffles from interfering with and diluting the oscillating air flow 16.

A vertical distance between the baffles 30, 31 corresponds directly to the cross-sectional air flow area in the freezing chamber 15. A width of the conveyor belt 28 is therefore fixed. It is most efficient to operate the apparatus with a minimum acceptable height between the baffles 30, 31.

The height is therefore dependent upon a height of the product 18 being transported through the freezing chamber 15. When the cross-sectional area of the freezing chamber 15 is minimized, a velocity of the gas flow 16 on the surface of the product 18 can be increased with constant volumetric flow.

The sidewall 40 is constructed to provide a cylinder for the piston assembly 36 in which the piston 44 is disposed for reciprocating movement. The piston 44 is connected to a shaft 46 which can be of the screw jack or of the hydraulic type, which in turn is connected to a motor 48 for operating the piston 44. Seals 50 or gaskets mounted to the piston 44 prevent a majority if not all of the gas 16 from getting behind the pistons 44, 52 into the respective cylinders.

The sidewall 42 is constructed to provide a cylinder for the piston assembly 38 in which the piston 52 is disposed for reciprocating movement. The piston 52 is connected to a shaft 54 which can be of the screw jack or of the hydraulic type, which in turn is connected to a motor 56 for operating the piston 52. Seals 58 or gaskets mounted to the piston 52 prevent a majority if not all of the gas from getting behind the pistons into the respective cylinders.

As mentioned above, the sidewalls 40, 42 are interconnected in the space 14 and therefore, for purposes of this disclosure, that portion of the sidewalls 40, 42 in the space is referred to as the upper baffle 31.

The upper baffle 31 may be of solid construction and is provided with at least one hole 62 or port extending therethrough such that a pipe 64 or conduit can be inserted through the hole 62 to introduce liquid cryogen into the freezer apparatus 10. The liquid cryogen provided, CO₂ or N₂, will usually change phase into a gaseous-solid phase when injected into the chamber 15.

The pipe 64 has a first end connected to a manifold 66 from which at least one or a plurality of nozzles 68 are in communication therewith. The manifold 66 is disposed in the chamber 15. An opposite end of the pipe 64 is connected to a source of liquid cryogen (not shown). The pipe includes a control valve 70 for controlling an amount of the liquid cryogen to be introduced into the pipe and through to the manifold 66.

The baffles 30, 31 coact to provide the freezing chamber 15 within the space 14. The cross section of the freezing chamber 15 is kept to as small a volume as possible in order to provide for increased velocity of a cryogen airflow 74 across the product 18, which in turn provides for increased heat transfer to the product.

A length of the housing 12 may be for example three meters to twenty meters and constructed as a tunnel freezer. The inlet and outlet skirts 24, 26 can be constructed of rubber, plastic or stainless steel and are adjustable depending upon the dimensions of the product 18 entering and being discharged from the freezing chamber 15.

The sidewall 42 at the cylinder for the piston 52 is provided with a bleed gas pipe 76 or conduit which is in communication with an interior of the cylinder as shown in FIG. 1 and in FIG. 2.

The apparatus functions as follows during operation:

Referring to FIG. 1, the conveyor belt 28 transfers in this example food products 18 through the freezing chamber 15 of the apparatus 10. The cryogenic injection assembly is arranged such that the manifold 66 will have at least one or alternatively a plurality of the nozzles 68 disposed more closely to the inlet 20 than to the outlet 22. The food product 18 being transported by the conveyor belt 28 is exposed to a cryogenic spray 72 as it passes in proximity to the nozzles 68. However, the oscillating gas flow 16 provides further heat transfer effect to the food products 18 as described below.

The pistons 44, 52 work in unison, that is, the pistons will be at least approximately 180 degrees out of phase with each other, such that when the inlet piston 44 is moving in a downstroke, the discharge piston 52 is moving in an upstroke. Referring still to FIG. 1, as the piston 44 proceeds in the downstroke the airflow 74 is forced as a convective gas flow through and along the freezing chamber 15 as the gas flow is concurrently being drawn toward the piston 52 in the upstroke as represented by the arrows 78.

As the piston 52 passes the bleed gas pipe 76, a select amount of the gas flow 78 is removed through the pipe 76 due to the flow actuating the swing check valve 83 to exhaust the flow from the chamber 15. It is also possible to synchronize the pistons 44, 52 so that their respective strokes do not cause the piston 52 to move past the pipe 76, thereby providing for the continued reuse of the convective gas flow 16.

When the pistons 44, 52 have finished their respective strokes as shown in FIG. 1, said pistons reverse direction as shown in FIG. 2. That is, for the next successive stroke shown in FIG. 2, the outlet piston 52 is forced downward to provide an airflow 80 back across the freezing chamber 15 toward the piston 36. Movement of the piston 52 in its downward stroke provides a venture effect where the bleed gas pipe 76 is in communication with the cylinder of the piston assembly 38, thereby moving the swing check valve 83 into the closed position, so as not to draw air or atmosphere external to the housing 12 into the freezing chamber 15.

The airflow 80 is drawn by the upstroke of the inlet piston 44 as shown by the arrows 82. In addition, this return airflow 80 has the effect of recharging the airflow in the freezing chamber 15, because it is again subjected to the cryogen spray 72 being introduced into the freezing chamber by the nozzle(s) 68. Upon conclusion of the flow represented in FIG. 2, the pistons 36, 38 again reverse direction and the cycle repeats itself as long as operationally necessary to chill or freeze the amount of products 18 to be processed.

A temperature gradient may also be provided by the apparatus 10 and the method employed by the apparatus. For example, from the inlet 20 to discharge at the outlet 22, a stroke length of the discharge piston 52 is increased thereby pulling more of the gas 78 in the direction of the outlet 22. The gas 78 can then be bled from the piston cylinder at the bleed gas pipe 76. A swing check valve 83 disposed in the bleed gas pipe 76 permits the gas to be bled from the piston cylinder and discharged as exhaust.

A larger portion of the overall gas mass is therefore directed to the outlet 22 and therefore, the gas warms during the freezing process and the temperature gradient is established. The pistons 44, 52 may be electronically controlled, and therefore a temperature gradient can be entered as an input to a control apparatus 84 connected to the pistons 44, 52 for operating the apparatus 10 at its most efficient setting. A desired temperature can be entered into the controller 84 by an operator.

The control valve 70 is actuated to permit a desired flow of cryogen to the nozzles 68 to satisfy the temperature requirement for the product 18 and the freezing chamber 15. Control of the temperature gradient is not dependent upon a temperature set point. As described above, a delta T (ΔT) is entered into the controller 84 and same controls the mass flow of cryogen vapour along a length of the freezing chamber 15 to achieve the temperature gradient selected.

Another embodiment of the apparatus 10 includes moving the pistons 44, 52 at shorter, quicker strokes along a distance of from approximately two millimetres to approximately six millimetres. The frequency of reversing the airflow 16 more quickly will create a vibratory action of the airflow to increase heat transfer to the products 18 without expending as much energy as moving the pistons 44, 52 through their full strokes.

The apparatus 10 and method of the present inventive embodiments provides for increased efficiency for using cryogen to chill or freeze the products 18 because no energy from fans is necessary in the apparatus 10. The apparatus 10 being able to operate its specific temperature gradients will also contribute toward higher efficiencies. There are fewer moving parts and therefore less maintenance for the apparatus 10.

It will be understood that the embodiments described herein are merely exemplary, and that one skilled in the art may make variations and modifications without departing from the spirit and scope of the invention. All such variations and modifications are intended to be included within the scope of the invention as described and claimed herein. Further, all embodiments disclosed are not necessarily in the alternative, as various embodiments of the invention may be combined to provide the desired result.

### List of reference numerals

- 10: freezer apparatus
- 12: housing
- 14: space
- 15: chamber, in particular freezing chamber
- 16: gas, in particular gas flow or air flow, for example convective gas flow or oscillating air flow
- 18: product, in particular food product
- 20: inlet
- 22: outlet
- 24: inlet door, in particular inlet skirt or inlet flap
- 26: outlet door, in particular outlet skirt or outlet flap
- 28: transport apparatus, in particular conveyor or conveyor belt
- 30: baffle, in particular lower baffle
- 31: baffle, in particular upper baffle
- 32: inlet exhaust flue
- 34: outlet exhaust flue
- 36: piston assembly
- 38: piston assembly
- 40: sidewall, in particular cylinder for piston assembly 36 or for piston 44
- 42: sidewall, in particular cylinder for piston assembly 38 or for piston 52
- 44: piston, in particular inlet piston
- 46: shaft
- 48: motor
- 50: seal or gasket
- 52: piston, in particular outlet piston or discharge piston
- 54: shaft
- 56: motor
- 58: seal or gasket
- 62: hole or port
- 64: conduit or pipe
- 66: manifold
- 68: nozzle
- 70: control valve
- 72: cryogen spray or cryogenic spray
- 74: airflow, in particular cryogen airflow
- 76: pipe or conduit, in particular bleed gas pipe or bleed gas conduit, for example bleed gas exhaust pipe or bleed gas exhaust conduit
- 78: gas, in particular gas flow
- 80: airflow back or return airflow
- 82: arrow
- 83: swing check valve
- 84: control apparatus or controller

## Claims

1. A freezer (10) for a product (18), in particular for a food product, comprising:
- a housing (12) having a sidewall (40, 42) defining a chamber (15) in the housing (12), and an inlet (20) and an outlet (22) in communication with the chamber (15); and
- a pair of pistons (44, 52) operatively associated with the housing (12) and in communication with the chamber (15), the pair of pistons (44, 52) operable out of phase with each other for oscillating a gas flow (16) within the chamber (15) to contact the product (18).

2. The freezer according to claim 1, further comprising a transport apparatus (28) extending from the inlet (20) through the chamber (15) to the outlet (22) for moving the product (18) through the freezer (10).

3. The freezer according to claim 1 or 2, further comprising a cryogen injection apparatus having
- a first end in communication with the chamber (15), and
- a second end in communication with a source of liquid cryogen.

4. The freezer according to claim 3, wherein the cryogen injection apparatus comprises at least one nozzle (68) connected to the first end of the cryogen injection apparatus for providing a cryogenic substance to the chamber (15).

5. The freezer according to claim 3 or 4, wherein the cryogen injection apparatus comprises a manifold (66) connected to the first end, the manifold (66) having at least one nozzle (68) for providing a cryogenic substance to the chamber (15).

6. The freezer according to at least one of claims 3 to 5, further comprising a control apparatus (84) in communication with the pair of pistons (44, 52) and the cryogen injection apparatus for controlling upstrokes and downstrokes of the pair of pistons (44, 52) and injection of a cryogenic substance into the chamber (15).

7. The freezer according to at least one of claims 3 to 6, wherein the liquid cryogen is selected from the group consisting of carbon dioxide (CO₂) and nitrogen (N₂).

8. The freezer according to at least one of claims 1 to 7, further comprising a bleed gas exhaust pipe (76) in communication with the chamber proximate one (52) of the pair of pistons (44, 52) for controlling removal of a portion of the oscillating gas flow (16) from the chamber (15) and preventing atmosphere external to the freezer (10) from entering the chamber (15).

9. The freezer according to at least one of claims 1 to 8, further comprising
- an inlet exhaust funnel, in particular an inlet exhaust flue, positioned proximate the inlet (20), and
- an outlet exhaust funnel, in particular an outlet exhaust flue, positioned proximate the outlet (22).

10. The freezer according to at least one of claims 1 to 9, further comprising
- an inlet door (24), in particular an inlet skirt or an inlet flap, mounted to the housing (12) at the inlet (20) and operable for restricting atmosphere external to the housing (12) from entering the chamber (15), and
- an outlet door (26), in particular an outlet skirt or an outlet flap, mounted to the housing (12) at the outlet (22) and operable for restricting the atmosphere external to the housing (12) from entering the chamber (15).

11. A method for reducing a temperature of a product (18) in a freezer (10), comprising:
- providing the product (18) to a chamber (15) of the freezer (10) for reducing the temperature of the product (18);
- injecting a cryogen substance into the chamber (15);
- oscillating an air flow (16) within the chamber (15) to charge the air flow (16) with the cryogen substance; and
- contacting the product (18) with the oscillating air flow (16).

12. The method according to claim 11, wherein the oscillating an air flow (16) comprises operating a pair of pistons (44, 52) out of phase and in communication with the chamber (15) for providing the oscillating air flow (16).

13. The method according to claim 12, wherein the operating comprises operating strokes of each one of the pair of pistons (44, 52) out of phase with other strokes of the other one of said pair of pistons (44, 52), and each of said strokes extending along a distance of from two millimetres to six millimetres.

14. The method according to at least one of claims 11 to 13, further comprising:
- removing a portion of the oscillating air flow (16) from the chamber (15); and
- establishing a temperature gradient across the chamber (15) during the removing.

15. The method according to claim 14, further comprising controlling the injecting a cryogen substance, the oscillating an air flow (16) and the removing a portion of the oscillating air flow (16) to provide the temperature gradient across the chamber (15).
